# EUROPEAN PATENT APPLICATION

(11) **EP 1 326 160 A1**
(43) Date of publication of application: **09.07.2003**
(21) Application number: 02354002.4
(22) Date of filing: 04.01.2002
(51) Int. Cl.: G06F 1/32, G06F 11/14

(54) **Data processing system and method**

(71) Applicant: Hewlett-Packard Company, A Delaware Corporation, Palo Alto, CA 94304 (US)
(72) Inventor: Neuman, Paul, 38640 Claix (FR); Vicard, Dominique, 38190 Bernin (FR)
(74) Representative: Lloyd, Richard Graham (GB)

(57) **Abstract**

The present invention relates to a data processing system and method for a client machine. Current working practices mean that an employee no longer has a permanent desk or fixed place of work. The PC that they may typically use to perform their role within an organisation may not be exclusively assigned to them. Clearly, this practice presents the difficulty of providing access to working files and data while the employee roams throughout the organisation. Therefore, the present invention provides a data processing method for a system in which the system context required for power management is saved to a network drive rather than to a local HDD. By storing the system context remotely, the employee can roam freely throughout the organisation and restore their system context at any machine at which they log-on. Furthermore, the present invention can be used to provide power management functions to thin client machines, which are typically used within such a roaming environment. The thin client machines do not have a locally accessible HDD that is typically required for power management.

## Description

### Field of the Invention

The present invention relates to a data processing system and method and, more particularly, to such a system and method that supports the freedom of movement of the individual.

### Background of the Invention

Within today's global industry many commercial organisations have geographically distributed offices and customers. This brings the realisation that an individual no longer has a permanent or fixed place of work and the need for a communication capability that can span many countries. The individual may be expected, from time to time, to travel to other offices within the organisation or to work from various locations within the same office.

Mobile computers have been developed to facilitate such distributed working. The mobile computers include laptop computers, personal data assistants and palm computers. Using these mobile computers, a user may, in effect, take the tools needed to perform their roles with them. Therefore, the individual is no longer constrained by the need to have access from a given terminal to the computing resources they would ordinarily need to perform their function. It will be appreciated that, when using such mobile computers, a user needs to ensure that they load the mobile computer with the appropriate applications and data required for a particular activity. This is particularly so in the case of a PDA, which has very limited resources such as memory, non-volatile storage, power and communication capability. Therefore, while mobile computers can be used to support, in part, the freedom of movement of the individual within the global market, they do not provide a satisfactory solution.

Many organisations have re-structured themselves to accommodate the need for individuals to be mobile and provided so-called hot-desks. A hot-desk is a work area, including conventional networked computing resources, at which an individual can sit and perform their intended role. The hot-desk provides the basic computing needs of a user, that is, the same applications are provided at the hot-desk as are available to the user via their PC in their conventional place of employment. It can be appreciated that while this can be advantageous in that the user will be familiar with these applications, the user cannot normally access the network resources of a network to which their conventional PC is connected.

Further, if an individual needs to move to a different location within the organisation, they would traditionally need to save all data upon which they had been working before shutting down the machine. Furthermore, should an individual need to move geographically within an office, the hot-desk may be taken if that individual does not return for several hours.

Often individuals have configured their computers to present certain application icons on their desktop. Moving from computer to computer in a hot-desk environment means that the user will no longer be guaranteed to have the same desktop or computer configuration.

It is an object of the present invention at least to mitigate some of the problems of the prior art.

### Summary of Invention

Accordingly, a first aspect of the present invention provides a data processing method for a system comprising a processor, an input device, volatile memory and a communication device to allow access to a remotely accessible non-volatile storage medium; the system being operable in a plurality of states, each having an associated level of power consumption; the method comprising the steps of outputting user identification data and corresponding data representing a system context, for storage on the remotely accessible non-volatile storage medium, to allow a transition to a first state from a second state of the plurality of states, and placing the system in the second state; receiving user identification data from the input device; retrieving, from the remotely accessible storage medium, the corresponding data representing the system context associated with the received user identification data; and restoring the system context using the retrieved data.

Preferably, embodiments provide a method in which the step of receiving user identification data comprises the step of receiving at least one of a user name and a corresponding password.

The need to retrieve the data representing the system context will vary according to the mode of failure or use of the system. Suitably, embodiments provide a method further comprising the step of retrieving the corresponding data representing the system context from the remotely accessible non-volatile storage medium in response to detection of an event while the system is in the second state.

Furthermore, embodiments provide a method comprising the steps of retrieving the corresponding data representing the system context from the remotely accessible non-volatile storage medium in the event that insufficient power was supplied to the system to maintain the second state.

It will be appreciated that various users of a machine will have different system contexts. Accordingly, embodiments provide a method comprising the steps of comparing the user identification data with previously stored user identification data; and retrieving the corresponding data representing the system context from the remotely accessible non-volatile second storage medium if the user identification data is different to the previously stored user identification data. Advantageously, embodiments can be arranged to detect changes in users and to load the appropriate system context in response to those changes.

Preferred embodiments provide a method further comprising the step of loading an operating system for the system.

Once the system is placed in a power saving mode of operation, only the bare minimum of data and software may be retained within memory, if at all. Therefore, embodiments provide a method in which the step of receiving the user identification data is performed prior to the step of loading the operating system. Preferably, the embodiments provide a method in which the system comprises a boot-time routine and the step of receiving the user identification data comprises the step of executing the boot-time routine to output a message to request the user to input their user identification data and for receiving the user identification data. It will be appreciated that in some embodiments the boot-time routine may be, for example, a BIOS routine.

It is sometimes the case that users forget to turn-off their machines prior to leaving work at the end of the day. Suitably, embodiments provide a method further comprising the step of receiving, via the communication device, data representing a command to place the system in one of the plurality of states. These embodiments advantageously allow a number of machines to be placed in a given power saving mode of operation via a central control machine that is operable automatically or under the control of a system administrator.

A still further advantage of the present invention addresses current network centric trends which have caused computing technology to develop in a manner such that so-called thin client machines are used that do not have any form of local non-volatile storage. In effect, a user of a thin client machine cannot save files to a local HDD. Known power saving mechanisms save the system context, which may include a copy of the whole of the content of the RAM, to the HDD to allow the machine to be placed in any one of a number of power saving states. The adoption of one of those states cannot be achieved in the absence of an HDD. Thin client machines can adopt a power saving mode even in the absence of local off-line storage using the embodiments of the present invention. It will be appreciated that the present invention is equally applicable to other systems which process, store or produce data for which such a power saving mechanism may be an advantage, providing those systems have access to non-volatile storage.

A further aspect of the present invention provides a data processing method for a system comprising a processor, means for receiving power and a first storage medium and a second, remotely accessible, non-volatile storage medium having first and second data access times respectively such that the first data access time is less than the second data access time; the system being operable in a plurality of states, each state having an associated level of system power consumption; the method comprising the steps of: saving data representing a current system context, to allow a transition to a first state of the plurality of states from a second state of the plurality of states, to both the first and second storage media; and placing the system in the second state; recovering the data from the first storage medium in response to detection of an event while the system is in the second state or, in the event that the power supply failed to supply sufficient power to the system, while in the second state, to maintain the second state, recovering the data from the remotely accessible second storage medium; and restoring the system context using the recovered data.

It will be appreciated that the means for receiving power may comprise a plug and associated electronics for receiving power from a cord of an external, stand alone, power supply or may represent the conventional plug and internal power supply.

Preferably, the method further comprises the step of entering, after restoring the system context, a selectable one of the plurality of states such as, for example, the first or second state.

A still further aspect of the present invention provides a data processing system comprising a processor, means for receiving power and a first storage medium and a remotely accessible second, non-volatile, storage medium having first and second data access times respectively such that the first data access time is less than the second data access time; the system being operable in a plurality of states, each state having an associated level of power consumption, the system further comprising: means for saving data representing a current system context, to allow a transition to a first state of the plurality of states from a second state of the plurality of states, to both the first and second storage media and means for placing the system in the second state; means for recovering the data from the first storage medium in response to detection of an event while the system is in the second state or, in the event that insufficient power was supplied to the system, while in the second state, to maintain the second state, recovering the data from the second storage medium; and means for restoring the system context using the recovered data.

Preferred embodiments provide a system further comprising means for entering, after restoring the system context, a selectable one of the plurality of states such as, for example, the first or second state.

Preferably, further aspects of the present invention provide a computer program element for implementing a method or system as described herein and a computer program product comprising a computer readable storage medium having stored thereon such a computer program element.

### Brief Description of the Drawings

Embodiments of the present invention will now be described, by way of example only, with reference to the accompanying drawings in which:
figure 1 shows schematically a computer system having a client machine within which power management can be realised;
figure 2 illustrates schematically ACPI states and state transitions for prior art power management systems;
figure 3 depicts power management states of an embodiment of the present invention;
figure 4 shows a flowchart of a power-off or sleep process according to an embodiment;
figure 5 illustrates a flowchart for restoring a system context when arising from a sleep state of an embodiment; and
figure 6 shows a flowchart for restoring a system context following a power failure during a sleep state of an embodiment.

### Description of the Preferred Embodiments

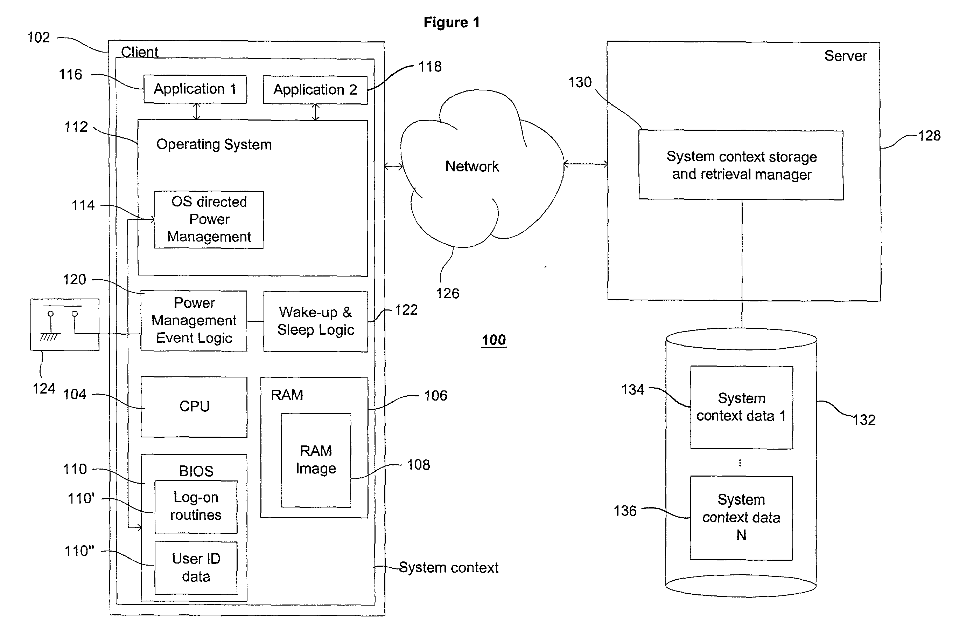

Figure 1 illustrates schematically a computer system 100 within which ACPI specification power management can be realised. The computer system 100 comprises a client machine 102, a processor 104, RAM 106 containing a RAM image 108. The client machine 102 comprises a boot-time routine, in this case a BIOS 110, which is preferably an ACPI BIOS. As is conventional, the client machine 102 has an operating system 112, which is arranged to implement operating system directed power management (OSPM) using corresponding OSPM software 114. The client machine 102 may run various applications 116 and 118. Additional hardware and software functionality is provided in the form of power management event detection logic 120, which detects events in response to which the current state S0-S4 of the client machine 102 may change to another state. For example, the user may depress an ON button 124, in which case the client machine 102 may effect a transition from a current sleeping state to a working state S0. Alternatively, the user may instigate a software shutdown of the client machine 102 in response to which the client machine may effect a transition from the current state S0 to a sleeping state. The events that the power management event detection logic 120 may detect also include other events, such as, for example, a modem or network generated event that signals to the OSPM that data is being received and the modem and RAM should be suitably powered-up to allow reception of the data.

The client machine 102 can communicate, via a network 126, with a remote server 128. The client machine 102, under prescribed power saving conditions, is arranged to transmit the system context, including the RAM image 108, to the server 128, where a system context storage and retrieval manager 130, is arranged to store data representing the system context on a non-volatile storage medium 132. The non-volatile storage medium is used to store a number of system contexts 134 and 136 of various corresponding client machines (not shown). The server 128 is centrally accessible from a number of client machines (not shown). This central accessibility allows a user to roam between any such client machines.

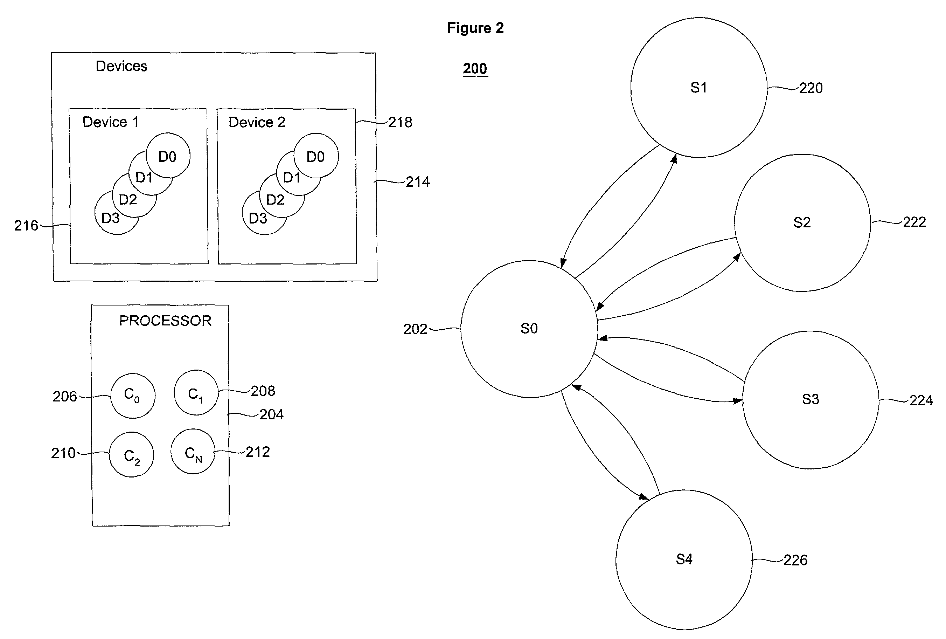

It will be appreciated that the embodiments advantageously use a common interface for enabling robust operating system directed motherboard system configuration and power management (OSPM) of the entire client machine 102. In particular, the Advanced Configuration and Power Interface (ACPI) specification, in addition to being used for power management, can assist in solving the above prior art problems. The current version of the ACPI is version 2, having a release date of July 27, 2000, together with the ACPI Errata version 1.3, November 27, 2000, both of which are incorporated herein by reference for all purposes. These standards define the following known power management states 200, which are shown in figure 2.

State S0: While a system or client machine is in state S0 202, the system is said to be in a working state. The behaviour of that state is defined such that a processor 204, or, in a multiprocessor system, the processors are, in one of a number of so-called processor states, C₀ 206, C₁ 208, C₂ 210,..., C_{N} 212, which each represent varying degrees of processor operation and associated power consumption. The processor maintains the dynamic RAM context. Any devices 214, such as first 216 and second 218 devices, connected to, or forming part of, the system are individually managed by the operating system software and can be in any one of four possible device states D0-D3, which, again, reflect varying degrees of power consumption. Any associated power resources are arranged to be in a state that is compatible with the device states.

State S1: The S1 state 220 is a low wake-up latency sleeping state. In this state, no system context is lost (CPU or chip set) and the system hardware maintains all system context.

State S2: The S2 state 222 is also considered to be a low wake-up latency sleeping state. The S2 state 222 is substantially similar to the S 1 state 220 but for the CPU and the system cache context being lost in the S2 state, since, typically, the operating system is responsible for maintaining cache and processor context.

State S3: The S3 state 224 is a low wake-up latency sleeping state where all system context is lost except system memory. The CPU, cache and chip set context are lost in this state. However, the system hardware maintains memory context and restores some CPU and L2 configuration context.

State S4: The S4 state 226 is the lowest power, longest wake-up latency, sleeping state supported by ACPI. To reduce power consumption, preferably to a minimum, it is assumed that the hardware platform has powered-off all devices. Platform context is maintained.

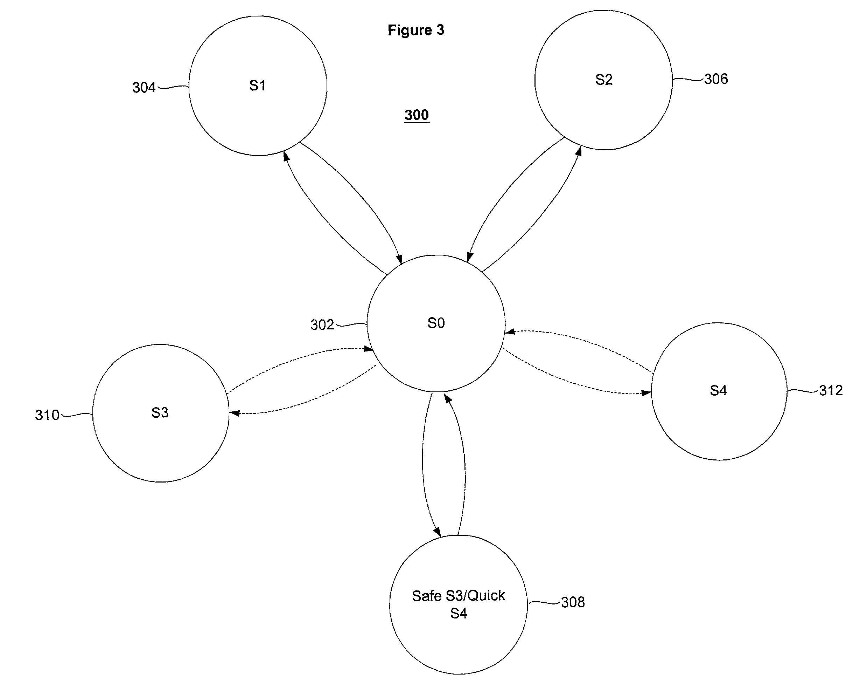

Figure 3 shows a state transition diagram 300 for a power management system according to an embodiment. Again, it can be seen that the state transition diagram 300 comprises a working system state S0 302. Preferably, the conventional states S1 304 and S2 306 are also supported. The states S0-S2 302 to 306 are substantially identical in operation and realisation to the corresponding states described above in relation to figure 2 and in the current ACPI specification.

Additionally, the state diagram 300 illustrates a new state, that is, a Safe S3/Quick S4 state 308 (SS3/QS4). The behaviour of the client machine 102 in the SS3/QS4 state 308 can be characterised by the actions of saving substantially the same system context data to the remotely accessible or network accessible non-volatile storage medium 132 as in the conventional S4 state while concurrently maintaining in memory the same data as the conventional S3 state. Furthermore, in the SS3/QS4 state 308 only the RAM 106 remains in a powered state. All other aspects of the client machine 102 adopt substantially the same power state as the conventional S3 state but for the power management event detection logic 120 to allow a wake-up from that state. It can be appreciated that data representing the system context is saved in a file on the HDD 132.

Therefore, if a power failure occurs while the system is in the SS3/QS4 state 308, the system context can be restored by loading the data representing the system context from the HDD 132 and restoring the system context. In contrast to the prior art power management state S3, if a power failure occurs, the system context is recoverable.

In the absence of a power failure, the system context, when waking from the SS3/QS4 state 308, can be restored within a relatively short period of time, such as, for example, 5 seconds. This time scale is substantially the same as the wake-up time for a conventional S3 state but with the additional security of also being recoverable from a power failure, unlike the conventional S3 state.

Preferably, once the context has been restored following a power failure, the system enters or resumes the SS3/QS4 state 308. However, it will be appreciated that embodiments could be realised in which any one of the states are entered upon recovery, as can be seen from the optional presence of conventional states S3 310 and S4 312.

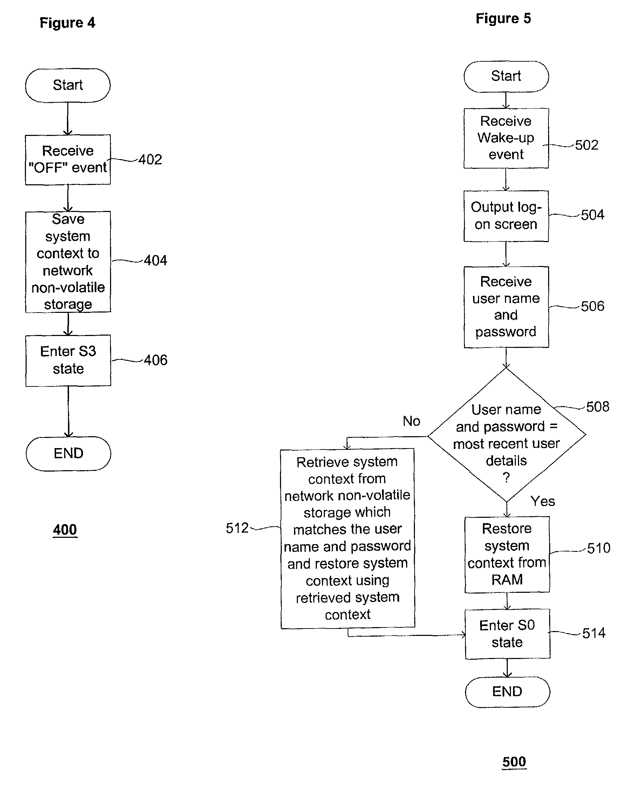

Referring to figure 4, there is shown schematically a flowchart 400 for an off process, that is, a process for ostensibly switching off the system that utilises the SS3/QS4 state 308. Upon detection of a power-off event by the power management event detection logic at step 402, the OSPM software 114 saves the entire system context to the non-volatile storage medium 132 at step 404. In step 406, the client machine 102 is arranged to adopt the same power saving configuration as the conventional S3 state.

The power off event that is detected at step 402 may be a user generated event or an automatically generated event based on a time-out process that is invoked in the absence of user activity for a predetermined period of time.

Referring to figure 5, there is shown a flowchart 500 for an "on" process, which uses the SS3/QS4 state 308 according to an embodiment. At step 502, the power management event detection logic 120 detects or receives a wake-up event and informs the wake-up and sleep logic 122 of that event. The wake-up event is arranged to invoke, at step 504, the log-on boot-time or BIOS routines 110' which present the user with a log-on screen. The log-on screen requests the user to enter user identification data. The user identification data may include a user name and a password. The user identification data is received by the log-on routine 110' at step 506. A determination is made, at step 508, whether the most recently entered user identification data matches previous user identification data 110" stored within the BIOS 110. If the most recently entered user identification data matches the previously stored user identification data, the wake-up and sleep logic 122 is arranged to instruct the OSPM software 114 to restore the system context from RAM 106 at step 510. It will be appreciated that the comparison will be performed using a comparator in the form of appropriate software as opposed to a comparator in the electronics sense. For example, an If...then...statement may be an appropriate software comparator. However, if it is determined at step 508 that the most recently entered user identification data does not match the previously stored user identification data, the user identification data, subject to the correct password having been entered, is used, in step 512, to retrieve the data representing the system context from the remote server 128. The user identification data is transmitted from the client machine 102, via the network 126, to the system context storage and retrieval manager 130. The system context storage and retrieval manager 130 uses the received user identification data to retrieve the data representing the system context that corresponds to the user identification data. The system context storage and retrieval manager 130 transmits the retrieved data to the client machine 102 where the OSPM software 114 restores the system context using that data.

Having restored the system context it is likely that the user intends to work at the client machine. Therefore, the client machine 102 is arranged to enter the working state 302 at step 514.

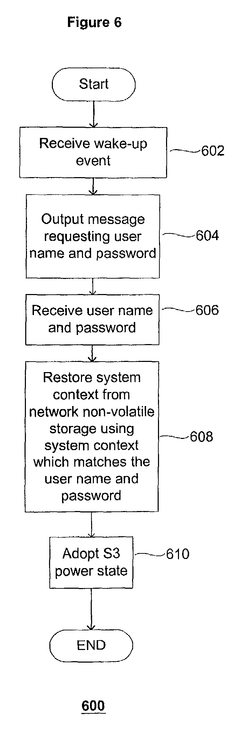

Figure 6 shows a flowchart 600 of a restore process to recover from a power failure while the system was in the SS3/QS4 state 308. Following such a failure, a wake-up event is detected by the power management event detection logic 120 at step 602. At step 604, the wake-up event logic 122 is arranged to invoke the log-on routines 110', which present the user with a log-on screen. The log-on screen requests the user to enter user identification data. The user identification data is received by the log-on routine at step 606. The user identification data, subject to the correct password having been entered, is used, in step 608, to retrieve the data representing the system context from the remote server 128. The user identification data is transmitted from the client machine 102, via the network 126, to the system context storage and retrieval manager 130. The system context storage and retrieval manager 130 uses the received user identification data to retrieve the data representing the system context that corresponds to the user identification data. The system context storage and retrieval manager 130 transmits the retrieved data to the client machine 102 where the OSPM software 114 restores the system context.

Once the system context has been restored, the power configuration of the client machine 102 is arranged by the OSPM software 114 to adopt substantially the same power configuration as in the conventional S3 state in step 610. However, the OSPM software 114 may be arranged to adopt any of the power management states.

Alternatively, following receipt of the wake-up event at step 602, the wake-up & sleep logic 122 may be arranged to retrieve, automatically, the previously stored user identification data 110" from the BIOS CMOS (not shown). Preferably, the user name and password are stored securely within the BIOS CMOS using appropriate hashing or cryptographic techniques. The retrieved user identification data 110" could be used in step 608 to retrieve the data representing the system context from the remote server 128. Once the data representing the system context has been retrieved and the system context has been restored, the OSPM software 114 may be arranged to cause the client machine 102 to adopt any one of the power management states. Preferably, the S3 state is adopted and processing continues at step 502 of figure 5, where a wake-up event is awaited.

A transition from the conventional S3 state to the working state, that is, state S0, takes approximately 5 seconds as does the transition to the S0 state from the SS3/QS4 state 308, which are both significantly quicker than the current 20-40 second wake-up time for an S4 to S0 transition. The SS3/QS4 state 308 has the additional advantage of allowing a consistent or safe recovery from a power failure while the system was in the power saving SS3/QS4 state 308.

Furthermore, even though the above embodiments have been described in terms of having a number of system states, the present invention is not limited to such system states. Embodiments can be realised in which other states, such as, for example, Legacy states, mechanical-off states G3 and soft-off S5 states, are also supported.

The above embodiments have been described with reference to the use of a remote HDD as the non-volatile storage medium. However, it will be appreciated that other forms of non-volatile storage medium may be used. For example, a remotely accessible flash-memory may be used to store the data to allow recovery from a power failure or to allow wake-up from a sleep state.

Although the above embodiments have been described with reference to the BIOS containing the log-on and password routines 110', the present invention is not limited to such arrangements. Alternative embodiments can be realised in which the routines for collating the user name and password are not contained within the BIOS. The routines may be stored within any boot-time accessible storage and executed by any boot-time available system; the BIOS being merely one example of such a boot-time system. However, these routines are still preferably low level routines that are loaded and executable beneath the operating system. In some embodiments, the routines may be executed by the BIOS but may not be contained within the BIOS. For example, the routines may be contained within a ROM of the system. Still further, the routines may interact with the previously stored user identification data 110" stored within the BIOS or BIOS CMOS.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A data processing method for a system comprising a processor, an input device, volatile memory and a communication device to allow access to a remotely accessible non-volatile storage medium; the system being operable in a plurality of states each having an associated level of power consumption; the method comprising the steps of outputting user identification data and corresponding data representing a system context, for storage on the remotely accessible non-volatile storage medium, to allow a transition to a first state of the plurality of states from a second state; placing the system in the second state; receiving the user identification data from the input device; retrieving, from the remotely accessible storage medium, the corresponding data representing the system context corresponding to the received user identification data; and restoring the system context using the retrieved data.

2. A method as claimed in claim 1, in which the step of retrieving the corresponding data representing the system context from the remotely accessible non-volatile storage medium is responsive to detection of an event while the system is in the second state.

3. A method as claimed in any preceding claim, in which the step of retrieving the corresponding data representing the system context from the remotely accessible non-volatile storage medium is responsive to insufficient power having been supplied to the system to maintain the second state.

4. A method as claimed in any preceding claim, comprising the step of comparing the received user identification data with previously stored user identification data; and in which the step of retrieving the corresponding data representing the system context from the remotely accessible non-volatile storage medium is responsive to the received user identification data being different to the previously stored user identification data.

5. A method as claimed in any preceding claim, in which the system comprises a boot-time routine and the step of receiving the user identification data comprises the step of executing the boot-time routine to output a message to request the user to input their user identification data and for receiving that user identification data.

6. A method as claimed in any preceding claim, further comprising the steps of receiving, via the communication device, data representing a command to place the system in an identified state of the plurality of states and placing the system in the identified state.

7. A data processing system comprising a processor, an input device, volatile memory and a communication device to allow access to a remotely accessible non-volatile storage medium; the system being operable in a plurality of states, each having an associated level of power consumption; the system further comprising a power management system for outputting user identification data and corresponding data representing a system context, for storage on the remotely accessible non-volatile storage medium, to allow a transition to a first state of the plurality of states from a second state and means to place the system in the second state; the power management system having means to receive user identification data from the input device and means to retrieve, from the remotely accessible storage medium, the corresponding data representing the system context corresponding to the received user identification data; and means to restore the system context using the retrieved data.

8. A system as claimed in claim 7, in which the means to retrieve the corresponding data representing the system context from the remotely accessible non-volatile storage medium is responsive to detection of an event while the system is in the second state.

9. A system as claimed in either of claims 7 to 8, in which the means to retrieve the corresponding data representing the system context from the remotely accessible second storage medium is responsive to insufficient power having been supplied to the system to maintain the second state.

10. A system as claimed in any of claims 7 to 9, in which the power management system comprises a comparator to compare the received user identification data with previously stored user identification data and in which the means to retrieve the corresponding data representing the system context from the remotely accessible second storage medium is responsive to the received user identification data being different to the previously stored user identification data.

11. A system as claimed in either of claims 7 and 10, in which a boot-time routine is arranged to output a message to request the user to input their user identification data and to receive the user identification data.

12. A system as claimed in any of claims 7 to 11, in which the power management system is arranged to receive, via the communications device, data representing a command to place the system in an identified state of the plurality of states and to place the system in the identified state.

13. A computer program element for implementing a method as claimed in any of claims 1 to 6 or a system as claimed in any of claims 7 to 12.

14. A computer program product comprising a computer readable storage medium having stored thereon a computer program element as claimed in claim 13.
